# EUROPÄISCHE PATENTSCHRIFT

(11) **EP 1 434 974 B1**
(45) Veröffentlichungstag und Bekanntmachung des Hinweises auf die Patenterteilung: **28.12.2016**
(21) Anmeldenummer: 02764889.8
(22) Anmeldetag: 26.09.2002
(51) Int. Cl.: G01F 23/284

(54) **VORRICHTUNG UND VERFAHREN ZUR BESTIMMUNG DES FÜLLSTANDES EINES FÜLLGUTS IN EINEM BEHÄLTER**
DEVICE AND METHOD FOR DETERMINING THE FILLING LEVEL OF A SUBSTANCE IN A CONTAINER
DISPOSITIF ET PROCÉDÉ POUR DETERMINER LE NIVEAU DE REMPLISSAGE D'UNE SUBSTANCE DANS UN CONTENANT

(30) Priorität: 10.10.2001 DE 10149851
(43) Veröffentlichungstag der Anmeldung: 07.07.2004
(73) Patentinhaber: Endress + Hauser GmbH + Co. KG, 79689 Maulburg (DE)
(72) Erfinder: LÜTKE, Wolfram, 83024 Rosenheim (DE); MALZAHN, Thomas, 48429 Rheine (DE); KIRST, Michael, 79112 Freiburg (DE)
(74) Vertreter: Andres, Angelika Maria
(86) Internationale Anmeldenummer: PCT/EP2002/010785
(87) Internationale Veröffentlichungsnummer: WO 2003/034004

(56) Entgegenhaltungen:
- EP-A1- 1 325 289
- WO-A-01/11323
- DE-A- 10 106 176
- US-A- 5 406 842
- US-A1- 2002 040 596

## Beschreibung

Die Erfindung bezieht sich auf eine Vorrichtung und ein Verfahren zur Bestimmung des Füllstandes eines Füllguts in einem Behälter über ein Laufzeitverfahren.

Laufzeitverfahren, beispielsweise das Pulsradarverfahren und das Frequenzmodulations-Dauerstrichradarverfahren (FMCW-Radar), nutzen die physika-lische Gesetzmäßigkeit aus, daß die Laufstrecke eines Meßsignals gleich ist dem Produkt aus seiner Laufzeit und seiner Ausbreitungsgeschwindigkeit. Bei der Füllstandsmessung entspricht die Laufstrecke der Meßsignale dem doppelten Abstand zwischen der Antenne und der Oberfläche des Füllguts. Das Nutzechosignal, also das an der Oberfläche des Füllguts reflektierte Signal, und dessen Laufstrecke werden anhand der sog. Echofunktion bzw. der digitalisierten Hüllkurve bestimmt. Die Hüllkurve repräsentiert die Amplituden der Echosignale als Funkton des Abstandes 'Antenne - Oberfläche des Füllguts'. Der Füllstand selbst ergibt sich aus der Differenz zwischen dem bekannten Abstand der Antenne zum Boden des Behälters und dem durch die Messung bestimmten Abstand der Oberfläche des Füllguts zur Antenne.

Bekannt gewordene Füllstandsmeßgeräte sind derart ausgestaltet, daß sie die Meßsignale möglichst in einen punktförmigen Meßbereich der Oberfläche des Füllguts aussenden. Bei einer üblicherweise eingesetzten Antenne (Horn-, Stab-, Planar- oder Parabolantenne) liegt dieser Meßbereich in einer direkten Verlängerung zur Längsachse bzw. zur rotationssymmetrischen Achse der Antenne.
Entsprechend ausgestaltete Füllstandsmeßgeräte liefern verläßliche Meß-daten, solange die Längsachse der Antenne zumindest näherungsweise in Richtung der Oberflächennormalen des Füllguts positioniert ist. Diese Positionierung der Antenne wird jedoch erschwert oder sogar verhindert, wenn beispielsweise der Deckel des Behälters gekrümmt ist oder wenn der Öffnungsstutzen, in dem die Antenne montiert ist, gegenüber der Oberfläche des Füllguts geneigt ist. Bei einem schrägem Einbau des Füllstandsmeß-geräts liegt die Laufstrecke der Meßsignale außerhalb der Oberflächen-normalen des Füllguts und entspricht somit nicht mehr dem kürzesten Abstand 'Antenne - Oberfläche des Füllguts'. Folglich entspricht die direkt gemessene Füllhöhe auch nicht mehr der aktuellen Füllhöhe des Füllguts in dem Behälter. Weiterhin besteht bei schrägem Einbau der Antenne bzw. bei schräger Abstrahlung der Meßsignale zunehmend die Gefahr, daß die Meßsignale zumindest bei gewissen Füllständen an der Wandung des Behälters oder an einem Einbauteil im Behälter, beispielsweise einem Rührwerk, reflektiert werden. Bei einem festen Füllgut (Schüttgut) ist darüber hinaus die Oberfläche des Füllguts in den seltensten Fällen eben. Oftmals weist sie einen Schüttkegel im Bereich des Zulaufs auf. Die zuvorgenannten Beispiele verdeutlichen, daß Füllstandsmessungen, die einen punktförmigen Bereich der Oberfläche des Füllguts als Meßort nutzen, durchaus zu fehlerhaften Meßergebnissen führen können.

Ein weiteres Problem bei der Füllstandsmessung mittels hochfrequenter Meßsignale, insbesondere mittels Mikrowellen, besteht darin, daß sich an der Antenne Ablagerungen von Füllgut oder Kondensat bilden können. Die Gefahr dieser sog. Ansatzbildung an der Antenne besteht vermehrt bei klebrigen, zähflüssigen, spritzenden und gerührten Füllgütern. Sie tritt aber auch auf bei Kondensatbildung an der Antenne. Zwar vertragen z. B. Mikrowellenantennen ein gewisses Maß an Verschmutzung; die Messung wird jedoch fehlerhaft oder versagt völlig, wenn die Schmutzschicht bzw. die Ansatzbildung ein gewisses Maß übersteigt.
So wird bei starker Ansatzbildung an der Antenne das Meßsignal letztlich vollständig absorbiert; ein Nutzechosignal ist dann überhaupt nicht mehr feststellbar. Das gleiche Phänomen tritt auf, wenn der Füllstand innerhalb der sog. Blockdistanz der Antenne liegt. Mit den bekannt gewordenen Methoden kann nicht ohne weiteres unterschieden werden, ob das fehlende Nutzecho-signal auf eine Ansatzbildung zurückzuführen ist oder aber auf die Tatsache, daß sich die Oberfläche des Füllguts in unmittelbarer Nähe zur Antenne bzw. innerhalb der Blockdistanz der Antenne befindet.

Der Erfindung liegt die Aufgabe zugrunde, eine Vorrichtung und ein Verfahren vorzuschlagen, die eine hochgenaue Messung des Füllstands eines Füllguts in einem Behälter über ein Laufzeitverfahren ermöglichen.

Die Aufgabe wird durch eine erfindungsgemäße Vorrichtung gelöst, die die folgenden Komponenten aufweist: Eine Sendeeinheit, die Meßsignale über eine Patch-Antenne mit einer Vielzahl von Patches und mit zumindest einer elektronisch geschalteten Hauptabstrahl-richtung aussendet, wobei die Hauptabstrahlrichtung der Meßsignale entweder außerhalb der Oberflächennormalen des Füllguts liegt oder wobei die Längsachse der Antenne außerhalb der Oberflächennormalen des Füllguts und wobei die zumindest eine Hauptabstrahlrichtung der Meßsignale im wesentlichen in Richtung der Oberflächennormalen des Füllguts liegt, oder wobei die Hauptabstrahlrichtungen der Meßsignale so gewählt sind, daß die Meßsignale in zumindest zwei voneinander verschiedene Meßbereiche, die sich im Nahfeld und/oder im Fernfeld der Sendeeinheit befinden, abgestrahlt werden; eine Empfangseinheit, die die in dem zumindest einen Meßbereich reflektierten Echosignale empfängt; eine Regel-/Auswerteschaltung, die anhand der Laufzeit der reflektierten Echosignale den Füllstand und/oder prozeß- bzw. sensorbedingte Störgrößen im Innern des Behälters ermittelt. Bei der Sende-/Empfangseinheit kann es sich selbstverständlich um eine Antenne handeln.

Eine erste Variante der erfindungsgemäßen Vorrichtung zielt darauf ab, daß die Antenne so angesteuert wird, daß die Meßsignale unabhängig von dem Einbau der Antenne im Behälterdeckel oder in der Behälterwand im wesent-lichen in Richtung der Oberflächennormalen des Füllguts abgestrahlt und reflektiert werden. Gemäß einer zweiten Variante der erfindungsgemäßen Vorrichtung ist die Längsachse der Antenne im wesentlichen in Richtung der Oberflächennormalen des Füllguts positioniert. Die Antenne wird z. B. digital so angesteuert, daß die Meßsignale unterschiedliche Bereiche der Oberfläche des Füllguts oder des Behälterinnern abtasten / abscannen. Infolge dieser Abtastung wird Information über die Umgebung des Meßbereichs bereitge-stellt. Mittels der zweiten Variante der erfindungsgemäßen Vorrichtung ist es u.a. möglich, Unebenheiten an der Oberfläche des Füllguts zu erkennen und bei der Bestimmung des aktuellen Füllstands zu berücksichtigen.

Weiterhin ermöglicht es die Erfindung, in einen ersten Meßzyklus Information über den Füllstand (→ Fernfeld-Messung) und in einem zweiten Meßzyklus Information über z.B. eine Ansatzbildung an der Antenne (→ Nahfeld-Messung) zu erhalten.

Insbesondere ist vorgesehen, daß die Regel-/Auswerteschaltung die Patches elektronisch so schaltet, daß die Meßsignale zumindest zwei voneinander verschiedene Hauptabstrahl-richtungen aufweisen. Hierdurch ist es beispielsweise möglich, die Meßsignale gezielt so auszusenden, daß sie nicht an einem Einbauteil, das sich in dem Behälter befindet, reflektiert werden. Entsprechende Verfahren zum gezielten Abstrahlen und Empfangen von Meßsignalen sind übrigens in der Radar-technik unter dem Begriff 'digital beam forming' bekannt geworden.

Weiterhin ist vorgesehen, daß die Regel-/Auswerteeinheit die Patches so ansteuert, daß die Meßbereiche, in denen die Meßsignale auftreffen, in zumindest zwei voneinander verschiedenen Bereichen der Oberfläche des Füllguts liegen. Diese Variante ermöglicht es, bei festen Schüttgütern eine Aussage über den Schüttkegel bzw. die Struktur der Oberfläche des Füllguts zu machen. Weiterhin ist es hierdurch möglich, Hindernisse im Strahlengang zu erkennen und auszublenden.
Eine vorteilhafte Weiterbildung der erfindungsgemäßen Vorrichtung schlägt vor, daß die Regel-/Auswerteeinheit anhand mehrerer Meßsignale, die in unterschiedlichen Meßbereichen reflektiert wurden, das Nutzechosignal, also das an der Oberfläche des Füllguts reflektierte Meßsignal, zu bestimmen. Im einfachsten Fall erfolgt diese Bestimmung durch eine Mittelwertbildung.

Die beiden zuvor genannten vorteilhaften Ausgestaltungen der erfindungsgemäßen Vorrichtung zielen im wesentlichen auf Messungen im Fernfeld der Antenne ab: So können im Fernfeld befindliche Einbauteile oder eine ungleichmäßig geformte Füllgutoberfläche bei der Ermittlung des aktuellen Füllstands berücksichtigt werden. Eine sehr interessante Ausgestaltung der erfindungsgemäßen Vorrichtung ist nun darauf gerichtet, Meßwerte aus dem Fernfeld und dem Nahfeld der Antenne zu gewinnen und auszuwerten. Insbesondere ist vorgesehen, daß die Regel-/Auswerteeinheit anhand von Meßsignalen, die in einem ersten Meßbereich reflektiert werden, das Nutzechosignal ermittelt und daß die Regel-/Auswerteeinheit unter Nutzung von Meßsignalen, die in zumindest einem zweiten Meßbereich reflektiert werden, das Nutzechosignal korrigiert und/oder einer Plausibilitätsprüfung unterzieht und/oder die Ursache einer Fehlfunktion, insbesondere eine Ansatzbildung an der Sende-/Empfangseinheit, erkennt und/oder eine temporäre oder stationäre Störgröße im Innern des Behälters bzw. im Prozeß erkennt und ggf. bei der Füllstandsermittlung berücksichtigt.

Im Zusammenhang mit der Erkennung einer Fehlfunktion an der Patch-Antenne, z.B. einer Ansatzbildung, schlägt eine bevorzugte Ausgestaltung der erfindungsgemäßen Vorrichtung vor, daß die zumindest eine Sende-/Empfangseinheit einen Sendemode und einen Testmode aussendet bzw. empfängt, wobei die Hauptabstrahlrichtungen von Sendemode und Testmode voneinander verschieden sind. Zur Ermittlung des Füllstands wird auch weiterhin ein Sendemode mit einer ausgeprägten Vorwärtskeule gewählt; als Testmode wird bevorzugt ein Mode ausgewählt, der ausgeprägte Nebenkeulen aufweist.

Als sehr vorteilhaft wird es erachtet, wenn die Regel-/Auswerteeinheit die Sende-/Empfangseinheit so ansteuert, daß der Sendemode und der Test-mode alternierend gesendet bzw. empfangen werden; anschließend werden beide Moden unabhängig voneinander auswertet. Beispielsweise wird anhand des Sendemodes der Füllstand ermittelt, während anhand des Testmodes Information darüber gewonnen wird, ob sich an der Antenne Ansatz gebildet hat. In diesem Zusammenhang ist es üblicherweise ausreichend, wenn die Regel-/Auswerteeinheit den Testmode nur für vorgegebene Zeitintervalle aktiviert.

Eine alternative Ausgestaltung der erfindungsgemäßen Vorrichtung sieht vor, daß die Regel-/Auswerteeinheit die Meßsignale des Meßmodes aufgrund der Meßsignale des Testmodes korrigiert und/oder daß die Regel-/Auswerte-einheit die Meßsignale des Testmodes zur Erkennung stationärer oder temporärer Störgrößen im Innenraum des Behälters heranzieht.

Das erfindungsgemäße Verfahren weist die folgenden Verfahrensschritte auf: Meßsignale mit unterschiedlichen Hauptabstrahlrichtungen werden über zumindest eine Patch-Antenne mit einer Vielzahl von Sende- und/oder Empfangselementen in zumindest zwei voneinander verschiedene Meßbereiche, die im Innern des Behälters liegen, abgestrahlt; anschließend werden die in den verschiedenen Meßbereichen reflektierten Echosignale detektiert; die detektierten Echosignale werden zur Ermittlung des Füllstands und/oder zur Ermittlung von prozeß- und/oder sensorbedingte Störechosignalen herangezogen.

Die Erfindung wird anhand der nachfolgenden Zeichnungen näher erläutert. Es zeigt:
Fig. 1: eine schematische Darstellung einer ersten Variante der erfindungsgemäßen Vorrichtung,
Fig. 2: eine Draufsicht auf eine erste Ausgestaltung einer Patch-Antenne, die im Zusammenhang mit der erfindungsgemäßen Vorrichtung eingesetzt werden kann,
Fig. 3: eine Draufsicht auf eine zweite Ausgestaltung einer Patch-Antenne, die im Zusammenhang mit der erfindungsgemäßen Vorrichtung eingesetzt werden kann,
Fig. 4: ein Blockschaltbild zur Ansteuerung einer Vielzahl von Sende-/Empfangselementen und
Fig. 5: eine schematische Darstellung einer zweiten vorteilhaften Ausge-staltung der erfindungsgemäßen Vorrichtung.

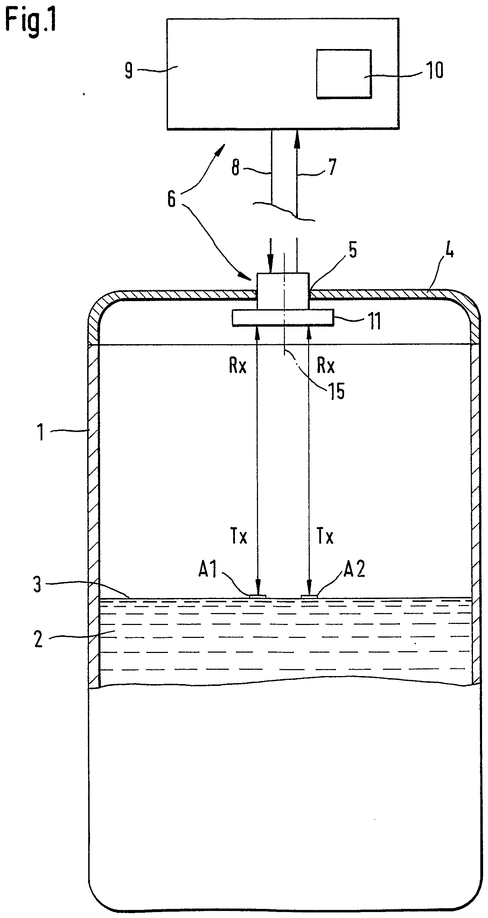

Fig. 1 zeigt eine schematische Darstellung einer ersten Variante der erfindungsgemäßen Vorrichtung. In dem Behälter 1 ist das Füllgut 2 gelagert Der Füllstand des Füllguts 2 in dem Behälter wird mittels des Füllstands-meßgerät 6 über ein Laufzeitverfahren ermittelt. Im gezeigten Fall ist die Antenneneinheit 11 mit Signalerzeugungs-, Sende- und Empfangseinheit räumlich von der Regel-/Auswerteeinheit 9 und der Speichereinheit 10 abgesetzt. Der Datenaustausch und die Stromversorgung zwischen Antenneneinheit 11 und der Regel-/Auswerteeinheit 9 erfolgt über die Verbindungsleitungen 8, 9. Es versteht sich von selbst, daß in Verbindung mit der vorliegenden Erfindung als Füllstandsmeßgerät 6 auch ein Kompaktgerät eingesetzt werden kann.

Die Antenneneinheit 11 ist in der Öffnung 5 im Deckel 4 des Behälters 1 montiert ist. Über die Antenneneinheit 11 werden Meßsignale Tx, insbe-sondere Mikrowellen, in Richtung der Oberflächennormalen des Füllguts 2 abgestrahlt. Im gezeigten Fall wird die Antenneneinheit 11 elektronisch so angesteuert, daß sie Meßsignale in zwei unterschiedliche Meßbereiche A1, A2 an der Oberfläche 3 des Füllguts 2 aussendet. Die reflektierten Echo-signale Rx werden in der Antenneneinheit 11 empfangen. Anhand der Laufzeit der Meßsignale Tx / Echosignale Rx ermittelt die Regel-/Auswerte-einheit 9 u.a. den aktuellen Füllstand des Füllguts 2 in dem Behälter 1.

Wie bereits zuvor erwähnt, kann die Antenne 11 erfindungsgemäß auch so montiert sein, daß die Längsachse 15 der Antenne 11 nicht parallel zur Oberflächennormalen des Füllguts 3 ausgerichtet ist. Dies ist - wie bereits zuvor gesagt - der Fall, wenn die Antenne in einem gekrümmten Behälter-deckel 4 montiert ist. Durch eine entsprechende elektronische Beschaltung der Antenne 11 kann die Hauptabstrahlrichtung der Meßsignale Tx in Richtung der Oberflächennormalen des Füllguts 2 realisiert werden.

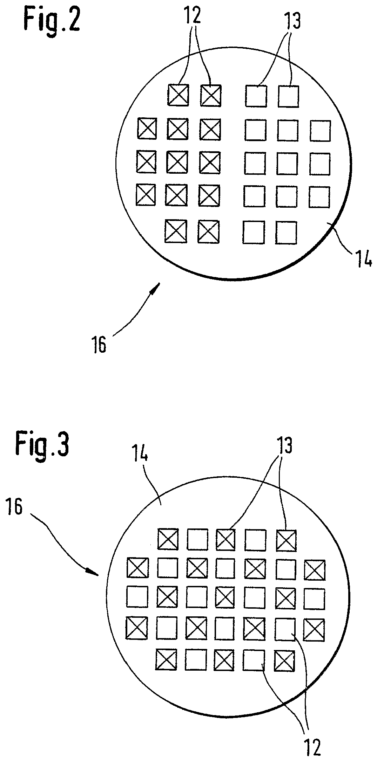

Bei der Antenne 11, die in Verbindung mit der erfindungsgemäßen Vorrich-tung eingesetzt werden kann, handelt es sich - wie in den Figuren Fig. 2 und Fig. 3 dargestellt - um eine Patch-Antenne 16. Patch-Antennen 16 weisen eine Vielzahl von definierten Sende- und/oder Empfangselementen 12, 13 auf. Durch gezieltes elektronisches Zusammenschalten der Elemente 12, 13 lassen sich Meßsignale Tx mit unterschiedlichsten Abstrahlcharakte-ristiken erzeugen. Verwiesen sei in diesem Zusammenhang auf die EP 1 076 244 A1.

Die in den Figuren Fig. 2 und Fig. 3 dargestellten Antennenstrukturen weisen jeweils eine Vielzahl von Sende- und/oder Empfangselementen 12, 13 auf. Der Einfachheit halber ist bei diesen Ausführungsbeispielen nur das Substrat 14 mit der darauf aufgebrachten Antennenstruktur dargestellt. Die weiteren Komponenten einer Plananrantenne/Patchantenne sind aus dem Stand der Technik hinlänglich bekannt.

Die Fläche eines einzelnen Sende- und/oder Empfangselements 12, 13 ist klein im Vergleich zur Fläche des Substrats 14. Symbolisch sind die Sende- und/oder Empfangselemente 12, 13 durch Kästchen dargestellt. Es versteht sich von selbst, daß jedes Sende- und/oder Empfangselement 12, 13 einzeln angeschlossen sein kann, indem z.B. in dem Substrat 14 entsprechend viele Bohrungen vorgesehen werden, durch die die elektrische Kontaktierung erfolgt.
Vorzugsweise werden jedoch mehrere Sende- und/oder Empfangselemente 12, 13 zu Funktionsblöcken zusammengeschlossen. So können z. B. wie in Fig. 2 dargestellt, alle im rechten Teil des Substrats angeordneten Sende- und/oder Empfangselemente 12, 13 und alle im linken Teil angeordneten Sende- und/oder Empfangselemente 12, 13 zu einem Funktionsblock zusammengeschaltet sein. Die Zuordnung ist in Fig. 2 symbolisch einge-tragen, indem die eine Hälfte der Sende- und/oder Empfangselemente 12 mit einem Kreuz markiert ist.

Bei dem in Fig. 3 dargestellten Ausführungsbeispiel ist die Zuordnung zu Funktionsblöcken gleichfalls durch Kreuze markiert. Auch hier sind zwei Funktionsblöcke vorgesehen, wobei die zugehörigen Sende- und/oder Empfangselemente 12, 13 schachbrettartig angeordnet sind.

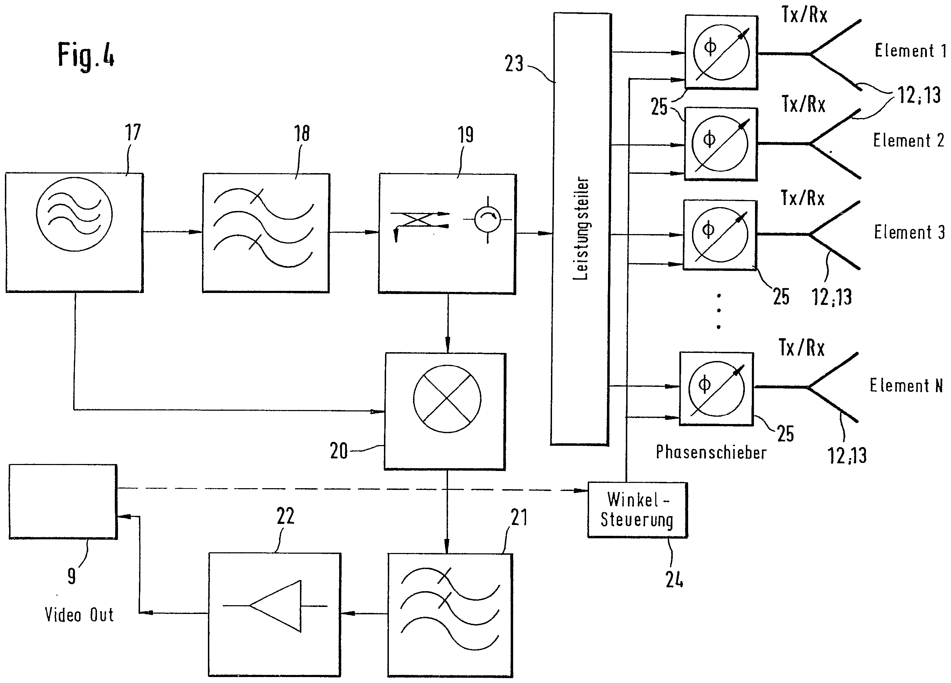

Fig. 4 zeigt ein Blockschaltbild zur elektronischen Beschaltung von 1, 2 ..., N Sende-/Empfangselementen 12, 13. Die Sende-/Empfangselemente 12, 13 sind beispielsweise die Patches, die auf einer der in den Figuren Fig. 2 und Fig. 3 gezeigten Patch-Antennen 16 angeordnet sind.

Als Signalerzeugungseinheit wird eine Frequenzerzeugungsschaltung 17 verwendet. Das in der Frequenzerzeugungsschaltung 17 erzeugte Signal wird über einen Tiefpaß 18 der Sende-/Empfangsweiche 19 zugeleitet. Die Sende-/Empfangsweiche 19 kann beispielsweise durch einen Richtkoppler oder einen Zirkulator realisiert sein. Die Sende-/Empfangsweiche 19 dient dazu, das Meßsignal Tx vom Echosignal Rx zu trennen. Über die Sende-/Empfangs-weiche 19, den Leistungsteiler 23 und N gesteuerte Phasenschieber 25 wird das Meßsignal Tx den N diskreten Sende-/Empfangselementen 12, 13 zugeleitet. Über die Winkelsteuerung 24, die selbstverständlich auch direkt in die Regel-/Auswerteeinheit 9 integriert sein kann, wird das bereits zuvor genannte 'digital beam forming' vorgenommen. Beispielsweise werden die Meßsignale Tx in zwei unterschiedliche Meßbereiche A1, A2 auf der Ober-fläche 3 des Füllguts 2 fokussiert - diese Variante ist in Fig. 1 dargestellt..

Das an der Oberfläche 3 des Füllguts 2 reflektierte Echosignal Rx wird dem Mischer 20 zugeführt, in dem es zwecks Demodulation mit dem Sendesignal Tx gemischt wird. Anschließend wird das heruntergemischte Echosignal Rx über einen Tiefpaß 21 einem Verstärker 22 zugeführt. Der Tiefpaß 21 dient der Elimination hochfrequenter, störender Signalanteile. Nachfolgend wird das gefilterte und verstärkte Signal der Regel-/Auswerteeinheit 9 zur Auswertung zugeleitet.

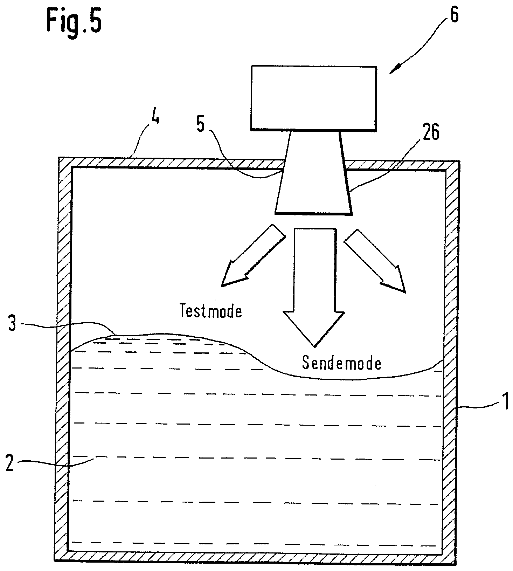

In Fig. 5 ist eine schematische Darstellung einer bevorzugten Variante der erfindungsgemäßen Vorrichtung zu sehen. Ein Füllstandsmeßgerät 6 ist in einer Öffnung 5 des Behälterdeckels 4 montiert. Die Meßsignale Tx bzw. die Echosignale Rx werden über eine Hornantenne 26 abgestrahlt bzw. empfangen. Das Füllstandsmeßgerät 6 erzeugt Meßsignale Tx mit - im gezeigten Fall - zwei unterschiedlichen Moden, einem Meßmode und einem Testmode. Der Meßmode weist in Abstrahlrichtung eine ausgeprägte Haupt-keule auf, d.h. der Hauptteil der Strahlungsenergie trifft in Richtung der Oberflächennormalen auf die Oberfläche 3 des Füllguts 2 auf und wird von dort reflektiert. Anhand der Echokurve bzw. der Hüllkurve ermittelt die Regel-/Auswerteeinheit 9 die Lage des Nutzechosignals und nachfolgend den Füllstand des Füllguts 2 in dem Behälter 3. Der Meßmode wird übrigens in Abhängigkeit von der jeweiligen Anwendung kontinuierlich oder alternierend betrieben.

Der Testmode weist, wie in der Fig. 5 skizziert, ausgeprägte Nebenkeulen auf. Bevorzugt wird übrigens ein 'temporärer' Testmode verwendet, d.h. der Testmode wird nur während vorgegebener Zeitintervalle aktiviert. Beispiels-weise handelt es sich bei dem Testmode um einen höheren Eigenmode der Antenne 26. Während der Meßmode zur Füllstandsbestimmung herange-zogen wird, liefert der Testmode Information über das Umfeld der Antenne bzw. über das Umfeld des Meßbereichs oder über die Verhältnisse und Veränderungen an der Antenne 26. Dieser Testmode reagiert empfindlicher und insbesondere auch besser auswertbar auf charakteristische und/oder strukturelle Veränderungen innerhalb des Meßvolumens. Er kann u. a. zur Ansatzüberwachung an der Antenne und/oder zur Plausibilitätskontrolle des gemessenen Füllstands herangezogen werden. Eine Auswertung des Testmodes erfolgt beispielsweise anhand der Echokurve oder über ein sonstiges Auswerteverfahren, das im Zusammenhang mit der Ermittlung des Füllstands über die Laufzeit von Meßsignalen bekannt geworden ist.

## Patentansprüche

1. Vorrichtung zur Bestimmung des Füllstandes, mit einem Behälter (1) und einem Füllgut (2) in dem Behälter (1), und mit einer Sende-/Empfangseinheit, die Meßsignale (Tx) über zumindest eine Antenne (11) in zumindest einen Meßbereich (A1; A2) aussendet bzw. aus dem Meßbereich (A1; A2) die Echosignale (Rx) empfängt, wobei die Antenne (11) so angeordnet ist, daß die Längsachse (15) der Antenne (11) nicht parallel zur Oberflächennormalen des Füllguts ausgerichtet ist, wobei es sich bei der Antenne (11) um eine Patch-Antenne (16) mit einer Vielzahl von Sende- und/oder Empfangselementen (12, 13) handelt, wobei eine Regel-/Auswerteeinheit (9) vorgesehen ist, die die Sende- und/oder Empfangselementen (12, 13) elektronisch so schaltet, daß die zumindest eine Hauptabstrahlrichtung der Meßsignale (Tx) im wesentlichen in Richtung der Oberflächennormalen des Füllguts (2) liegt,
und wobei die Regel-/Auswerteschaltung (9) anhand der Laufzeit der Echosignale (Rx) den Füllstand und/oder prozeß- bzw. sensorbedingte Störgrößen im Innern des Behälters (1) ermittelt.

2. Vorrichtung nach Anspruch 1,
daß die Regel-/Auswerteschaltung die Patches (12, 13) so ansteuert, daß die Meßsignale (Tx) zumindest zwei voneinander verschiedene Hauptstrahlrichtungen aufweisen.

3. Vorrichtung nach Anspruch 2,
wobei die Regel-/Auswerteeinheit (9) die Patches (12, 13) so ansteuert, daß die Meßbereiche (A1, A2) in zumindest zwei voneinander verschiedenen Bereichen der Oberfläche (3) des Füllguts (2) bzw. in zwei von einander verschiedenen Teilen des Behälters(1) liegen.

4. Vorrichtung nach Anspruch 3,
wobei die Regel-/Auswerteeinheit (9) anhand der aus mehreren Meßbereichen (A1, A2) reflektierten Meßsignale (Rx) das sog. Nutzechosignal, also das an der Oberfläche (3) des Füllguts (2) reflektierte Meßsignal, ermittelt.

5. Vorrichtung nach Anspruch 1,oder 4,
wobei die Regel-/Auswerteeinheit (9) anhand von Meßsignalen (Rx1), die in einem ersten Meßbereich (A1) reflektiert werden, das Nutzechosignal ermittelt und wobei die Regel-/Auswerteeinheit unter Nutzung von Meßsignalen (Rx2), die in einem zweiten Meßbereich (A2) reflektiert werden, das Nutzechosignal korrigiert und/oder einer Plausibilitätsprüfung unterzieht und/oder die Ursache einer Fehlfunktion, insbesondere eine Ansatzbildung an der Antenne (11), erkennt und/oder eine temporäre oder stationäre Störgröße im Innern des Behälters (1) bzw. im Prozeß erkennt und ggf. bei der Füllstandsermittlung berücksichtigt.

6. Vorrichtung nach Anspruch 1,
wobei die zumindest eine Sende-/Empfangseinheit einen Sendemode und einen Testmode aussendet bzw. empfangt und
wobei die Hauptabstrahlrichtungen von Sendemode und Testmode voneinander verschieden sind.

7. Vorrichtung nach Anspruch 6,
wobei die Regel-/Auswerteeinheit (9) die Sende-/Empfangseinheit so ansteuert, daß der Sendemode und der Testmode alternierend gesendet bzw. empfangen werden und
wobei die Regel-/Auswerteeinheit (9) beide Moden unabhängig voneinander auswertet.

8. Vorrichtung nach Anspruch 6 oder 7,
wobei die Regel-/Auswerteeinheit (9) den Testmode nur für vorgegebene Zeitintervalle aktiviert.

9. Vorrichtung nach Anspruch 6, 7 oder 8,
wobei die Regel-/Auswerteeinheit (9) die Meßsignale des Meßmodes aufgrund der Meßsignale des Testmodes korrigiert und/oder
wobei die Regel-/Auswerteeinheit (9) die Meßsignale des Testmodes zur Ansatzerkennung und oder zur Erkennung stationärer oder temporärer Störgrößen im Innenraum des Behälters (1) heranzieht.

10. Verfahren zur Bestimmung des Füllstandes eines Füllguts (2) in einem Behälter (1), mittels einer Sende-/Empfangseinheit, die Meßsignale (Tx) über zumindest eine Patch-Antenne (16) mit einer Vielzahl von Sende- und/oder Empfangselementen (12, 13) in zumindest einen Meßbereich (A1; A2) aussendet bzw. aus dem Meßbereich (A1; A2) die Echosignale (Rx) empfängt,
wobei die Patch-Antenne (16) so angeordnet ist, daß die Längsachse (15) der Patch-Antenne (16) nicht parallel zur Oberflächennormalen des Füllguts ausgerichtet ist,
wobei eine Regel-/Auswerteeinheit (9) vorgesehen ist, die die Patch-Antenne (16) elektronisch so schaltet, daß die zumindest eine Hauptabstrahlrichtung der Meßsignale (Tx) im wesentlichen in Richtung der Oberflächennormalen des Füllguts (2) liegt,
und wobei die Regel-/Auswerteschaltung (9) anhand der Laufzeit der Echosignale (Rx) den Füllstand und/oder prozeß- bzw. sensorbedingte Störgrößen im Innern des Behälters (1) ermittelt.

## Claims

1. Apparatus designed for determining the level, with a vessel (1) and a product (2) in the vessel (1), and with a transmission/reception unit, which emits measuring signals (Tx) via at least one antenna (11) to at least one measuring range (A1, A2), or receives the echo signals (Rx) from the measuring range (A1, A2), wherein the antenna (11) is arranged in such a way that the longitudinal axis (15) of the antenna (11) is not aligned parallel to the surface normal of the product, wherein the antenna (11) is a patch antenna (16) with a multitude of transmission and/or reception elements (12, 13), wherein a control/evaluation unit (9) is provided that electronically switches the transmission and/or reception elements (12, 13) in such a way that the at least one main radiation direction of the measuring signals (Tx) is essentially located in the direction of the surface normal of the product (2),
and wherein the control/evaluation circuit (9) uses the time of flight of the echo signals to determine the level and/or disturbance variables, which are caused by the process or sensor, inside the vessel (1).

2. Apparatus as claimed in Claim 1,
wherein the control/evaluation circuit (9) controls the patches (12, 13) in such a way that the measuring signals (Tx) have at least two main radiation directions that are different from one another.

3. Apparatus as claimed in Claim 2,
wherein the control/evaluation circuit (9) controls the patches (12, 13) in such a way that the measuring ranges (A1, A2) are located in at least two distinct areas of the surface (3) of the product (2) or in two distinct parts of the vessel (1).

4. Apparatus as claimed in Claim 3,
wherein, on the basis of the measuring signals (Rx) reflected from multiple measuring ranges (A1, A2), the control/evaluation unit (9) determines the useful echo signal, i.e. the measuring signal reflected at the surface (3) of the product (2).

5. Apparatus as claimed in Claim 1 or 4,
wherein, on the basis of measuring signals (Rx1) that are reflected in a first measuring range (A1), the control/evaluation unit (9) determines the useful echo signal, and wherein, using measuring signals (Rx2) that are reflected in a second measuring range (A2), the control/evaluation unit corrects the useful echo signal and/or runs a plausibility check on the useful echo signal and/or detects the cause of a malfunction, particularly the buildup of deposits on the antenna (11), and/or detects a temporary or stationary disturbance variable inside the vessel (1) or in the process and takes this into consideration, where applicable, when determining the level.

6. Apparatus as claimed in Claim 1,
wherein the at least one transmission/reception unit emits or receives a transmission mode and a test mode, and
wherein the main radiation directions of the transmission mode and the test mode differ from one another.

7. Apparatus as claimed in Claim 6,
wherein the control/evaluation unit (9) controls the transmission/reception unit in such a way that the transmission mode and the test mode are sent or received in alternation, and
wherein the control/evaluation unit (9) evaluates both modes independently of one another.

8. Apparatus as claimed in Claim 6 or 7,
wherein the control/evaluation unit (9) only activates the test mode for predefined intervals.

9. Apparatus as claimed in Claim 6, 7 or 8,
wherein the control/evaluation unit (9) corrects the measuring signals of the measuring mode on the basis of the measuring signals of the test mode and/or
wherein the control/evaluation unit (9) uses the measuring signals of the test mode to detect buildup and/or to detect stationary or temporary disturbance variables inside the vessel (1).

10. Procedure to determine the level of a product (2) in a vessel (1) using a transmission/reception unit which emits measuring signals (Tx) via at least one patch antenna (16) with a multitude of transmission and/or reception elements (12, 13) to at least one measuring range (A1, A2), or which receives the echo signals (Rx) from the measuring range (A1, A2),
wherein the patch antenna (16) is arranged in such a way that the longitudinal axis (15) of the patch antenna (16) is not aligned parallel to the surface normal of the product,
wherein a control/evaluation unit (9) is provided that electronically switches the patch antenna (16) in such a way that the at least one main direction of radiation of the measuring signals (Tx) is essentially located in the direction of the surface normal of the product (2),
and wherein the control/evaluation circuit (9) uses the time of flight of the echo signals (Rx) to determine the level and/or disturbance variables inside the vessel (1) that are caused by the process or sensor.

## Revendications

1. Dispositif destiné à la détermination du niveau, avec un réservoir (1) et un produit de remplissage (2) dans le réservoir (1), et avec une unité d'émission / de réception, qui émet les signaux de mesure (Tx) par l'intermédiaire d'au moins une antenne (11) dans au moins une plage de mesure (A1, A2), ou reçoit les signaux d'écho (Rx) issus de la plage de mesure (A1, A2), l'antenne (11) étant disposée de telle sorte que l'axe longitudinal (15) de l'antenne (11) n'est pas aligné parallèlement à la normale de surface du produit de remplissage, l'antenne (11) étant une antenne patch (16) dotée d'un grand nombre d'éléments d'émission et/ou de réception (12, 13), une unité de régulation / d'exploitation (9) étant prévue, laquelle commande de façon électronique les éléments d'émission et/ou de réception (12, 13) de telle sorte que l'au moins une direction de rayonnement principale des signaux de mesure (Tx) se situe pour l'essentiel dans la direction de la normale de surface du produit de remplissage (2),
et pour lequel l'unité de régulation / d'exploitation (9) détermine au moyen du temps de propagation des signaux d'écho (Rx) le niveau et/ou les grandeurs perturbatrices dues au process ou au capteur à l'intérieur du réservoir (1).

2. Dispositif selon la revendication 1,
pour lequel l'unité de régulation / d'exploitation (9) commande les éléments d'émission et/ou de réception (12, 13) de telle sorte que les signaux de mesure (Tx) présentent au moins deux directions de rayonnement principales différentes l'une de l'autre.

3. Dispositif selon la revendication 2,
pour lequel l'unité de régulation / d'exploitation (9) commande les éléments d'émission et/ou de réception (12, 13) de telle sorte que les plages de mesure (A1, A2) se situent dans au moins deux zones distinctes de la surface (3) du produit de remplissage (2) ou dans deux parties distinctes du réservoir (1).

4. Dispositif selon la revendication 3,
pour lequel l'unité de régulation / d'exploitation (9) détermine au moyen des signaux de mesure (Rx) réfléchis à partir de plusieurs plages de mesure (A1, A2) le signal d'écho utile, c'est-à-dire le signal de mesure réfléchi à la surface (3) du produit de remplissage (2).

5. Dispositif selon la revendication 1 ou 4,
pour lequel l'unité de régulation / d'exploitation (9) détermine le signal d'écho utile au moyen des signaux de mesure (Rx1), qui sont réfléchis dans une première plage de mesure (A1) et pour lequel l'unité de régulation / d'exploitation (9) corrige le signal d'écho utile en utilisant les signaux de mesure (Rx2), qui sont réfléchis dans une deuxième plage de mesure (Rx2), et/ou soumet à un contrôle de plausibilité et/ou détermine la cause d'un dysfonctionnement, notamment une formation de dépôt sur l'antenne (11), et/ou détermine une grandeur perturbatrice temporaire ou stationnaire à l'intérieur du réservoir (1) ou dans le process et, le cas échéant, en tient compte pour la détermination du niveau.

6. Dispositif selon la revendication 1,
pour lequel l'au moins une unité d'émission / de réception émet ou reçoit un mode d'émission et un mode de test et
pour lequel les directions de rayonnement principales du mode d'émission et du mode de test sont différentes l'une de l'autre.

7. Dispositif selon la revendication 6,
pour lequel l'unité de régulation / d'exploitation (9) commande l'unité d'émission / de réception de telle sorte que le mode d'émission et le mode de test sont émis ou reçus alternativement et
pour lequel l'unité de régulation / d'exploitation (9) exploite les deux modes indépendamment l'un de l'autre.

8. Dispositif selon la revendication 6 ou 7,
pour lequel l'unité de régulation / d'exploitation (9) active le mode de test uniquement pendant des intervalles de temps prédéfinis.

9. Dispositif selon la revendication 6, 7 ou 8,
pour lequel l'unité de régulation / d'exploitation (9) corrige les signaux de mesure du mode de mesure sur la base des signaux de mesure du mode de test et/ou pour lequel l'unité de régulation / d'exploitation (9) s'appuie sur les signaux de mesure du mode de test pour la détection d'un dépôt et/ou pour la détection de grandeurs perturbatrices stationnaires ou temporaires à l'intérieur du réservoir (1).

10. Procédé destiné à la détermination du niveau d'un produit de remplissage (2) dans un réservoir (1) au moyen d'une unité d'émission / de réception, qui émet les signaux de mesure (Tx) par l'intermédiaire d'une antenne patch (16) dotée d'un grand nombre d'éléments d'émission et/ou de réception (12, 13) dans au moins une plage de mesure (A1, A2), ou qui reçoit les signaux d'écho (Rx),
pour lequel l'antenne patch (16) n'est pas alignée parallèlement à la normale de surface du produit de remplissage,
pour lequel est prévue une unité de régulation / d'exploitation (9), qui commande de façon électronique l'antenne patch (16) de telle sorte que l'au moins une direction de rayonnement principale des signaux de mesure (Tx) se situe pour l'essentiel dans la direction de la normale de surface du produit de remplissage (2),
et pour lequel l'unité de régulation / d'exploitation (9) détermine au moyen du temps de propagation des signaux d'écho (Rx) le niveau et/ou les grandeurs perturbatrices dues au process ou au capteur à l'intérieur du réservoir (1).
